# EUROPÄISCHE PATENTANMELDUNG

(11) **EP 1 367 302 A2**
(43) Veröffentlichungstag der Anmeldung: **03.12.2003**
(21) Anmeldenummer: 03010600.9
(22) Anmeldetag: 12.05.2003
(51) Int. Cl.: F16J 15/40

(54) **Dichtungsanordnung**

(30) Priorität: 27.05.2002 DE 10223500; 30.08.2002 DE 10240073
(71) Anmelder: Dürr Systems GmbH, 70435 Stuttgart (DE)
(72) Erfinder: Sommer, Georg M., 71348 Weinstadt (DE); Baumann, Michael, 74223 Flein (DE)
(74) Vertreter: Heusler, Wolfgang, Dipl.-Ing.

(57) **Zusammenfassung**

Dichtungsanordnung (5) zur berührungslosen Abdichtung eines Spaltes zwischen einem Umfangsrand einer Einführöffnung (4) einer Reinigungsvorrichtung und einem in die Einführöffnung (4) eingeführten Beschichtungsmittel-Applikationsgerät mit einer am Umfangsrand der Öffnung angeordneten Düse (22) zur Abgabe eines die Öffnung (4) mindestens teilweise abdichtenden Sperrfluidstroms im wesentlichen quer über die Öffnung (4). Es wird vorgeschlagen, dass sich die Düse in Umfangsrichtung mindestens über einen Großteil des Umfangsrandes der Öffnung (4) erstreckt.

## Beschreibung

Die Erfindung betrifft eine Dichtungsanordnung zur berührungslosen Abdichtung einer Öffnung, insbesondere zur Abdichtung eines Spaltes zwischen einem Umfangsrand einer Einführöffnung einer Reinigungsvorrichtung und einem in die Einführöffnung eingeführten Beschichtungsmittel-Applikationsgerät, gemäß dem Oberbegriff des Anspruchs 1.

Sprühvorrichtungen, wie Spritzpistolen zum Zerstäuben oder Vernebeln von Farbe, wie zum Beschichten von Fahrzeugkarossen oder sonstigen Werkstücken verwendet werden, müssen vor allem im Bereich der Farbdüsen und evtl. vorhandener Luftdüsen in regelmäßigen Abständen gereinigt, d. h. von dem durch Farbnebel und Farbtropfen entstehenden Eigenbeschichtungsbelag befreit werden. Aus EP 0 333 040 B1 ist eine Reinigungsvorrichtung bekannt, in welcher ein Beschichtungsmittel-Applikationsgerät, wie beispielsweise eine Spritzpistole, mit einer Reinigungsflüssigkeit besprüht und dadurch gereinigt wird. Das Beschichtungsmittel-Applikationsgerät wird hierbei von oben durch eine Einführöffnung in die bekannte Reinigungsvorrichtung eingeführt, wobei eine herkömmliche Gummidichtung die Einführöffnung abdichtet, um ein Austreten der Reinigungsflüssigkeit zu verhindern.

Nachteilig an der Abdichtung der Einführöffnung durch eine Gummidichtung ist die Tatsache, dass es durch den Berührungskontakt zwischen der Gummidichtung und dem Beschichtungsmittel-Applikationsgerät zu einem Verschleiß der Gummidichtung durch Materialabtrag und einen Verlust der Vorspannung kommt. Die Folgen dieses Verschleißes sind eine nachlassende Dichtwirkung bis hin zum Versagen, ein unkontrollierter Austritt von Reinigungsflüssigkeit und/oder eine Schmutzverdünnung und somit eine Verschmutzung des Beschichtungsmittel-Applikationsgerätes und der Reinigungsvorrichtung. Bei einer Benetzung des Beschichtungsmittel-Applikationsgerätes aufgrund einer unzureichenden Dichtwirkung der Gummidichtung besteht die Gefahr eines späteren Heruntertropfens von Reinigungsflüssigkeit auf die zu lackierende Oberfläche. Ein weiterer Nachteil der Abdichtung durch eine Gummidichtung besteht in der Möglichkeit eines Abstreifens von Lack an der Gummidichtung, wobei sich die Lackverschmutzung an nicht zu reinigenden Bereichen des Beschichtungsmittel-Applikationsgerätes sammelt und auf die zu lackierende Oberfläche fallen kann.

Es wurde bereits vorgeschlagen, zur berührungslosen und damit verschleißfreien Abdichtung der Einführöffnung einer Reinigungsvorrichtung für das Beschichtungsmittel-Applikationsgerät durch mehrere, über den Umfangsrand der Einführöffnung verteilt angeordnete Düsen einen Sperrluftstrom quer über die Einführöffnung zu blasen. Die Abdichtung durch solche einzelnen Düsen ist jedoch ebenfalls unbefriedigend, da es zu einem Austritt von Reinigungsflüssigkeit und der damit verbundenen Gefahr eines Heruntertropfens von Reinigungsflüssigkeit kommt.

Der Erfindung liegt somit die Aufgabe zugrunde, bei einer Dichtungsanordnung der betrachteten Art zur berührungslosen Abdichtung einer Öffnung die Dichtwirkung zu verbessern.

Die Aufgabe wird bei einer Dichtungsanordnung zur berührungslosen Abdichtung gemäß dem Oberbegriff des Anspruchs 1 durch die kennzeichnenden Merkmale des Anspruchs 1 gelöst.

Die Erfindung umfasst die allgemeine technische Lehre, durch eine geeignete Düsenanordnung einen möglichst gleichmäßigen Sperrluftstrom zur Abdichtung einer Öffnung zu erreichen.

Hierzu ist vorzugsweise vorgesehen, dass sich die Düse für die Abgabe des Sperrluftstroms in Umfangsrichtung mindestens über einen Großteil des Umfangsrandes der abzudichtenden Öffnung erstreckt. Hierdurch wird ein gleichmäßiger Sperrluftstrom über der abzudichtenden Öffnung ohne Dichtungslücken erreicht.

In einer bevorzugten Ausführungsform der Erfindung erstreckt sich die Düse für die Abgabe des Sperrluftstroms in Umfangsrichtung über den gesamten Umfang der Öffnung, jedoch ist es auch möglich, dass sich die Düse nur an einer Seite der abzudichtenden Öffnung über einen Großteil des Umfangsrandes erstreckt.

Hierbei ist zu erwähnen, dass zur Abdichtung der Öffnung an Stelle eines Druckluftstroms auch ein anderes Fluid eingesetzt werden kann, wobei sich vorzugsweise gasförmige oder flüssige Fluide zur Abdichtung eignen.

In einer bevorzugten Ausführungsform der Erfindung weist die Dichtungsanordnung einen die abzudichtende Öffnung umgebenden Ring mit einem im Inneren des Rings angeordneten umlaufenden Kanal zur Zuführung des Sperrfluids auf, wobei der Kanal in-einen an der Innenseite des Rings angeordneten umlaufenden Spalt mündet, der die Düse bildet. Bei einer derartigen Ausgestaltung der erfindungsgemäßen Dichtungsanordnung kann die Zuführung des Sperrfluids (z. B. Druckluft) an einer zentralen Einspeisestelle erfolgen, wobei der in dem Ring umlaufende Kanal das Sperrfluid gleichmäßig über den Umfangsrand der Öffnung verteilt.

Die Zuführung des Sperrfluids in den Kanal erfolgt hierbei vorzugsweise über eine Zuführbohrung, die vorzugsweise eine tangentiale Richtungskomponente aufweist. Dies bietet den Vorteil, dass sich das zugeführte Sperrfluid gleichmäßig in dem Kanal verteilt, wodurch sich der über die Düse abgegebene Sperrfluidstrom gleichmäßig über den Umfang der Einführöffnung verteilt. Vorzugsweise sind hierbei über den Umfang des Kanals für die Zuführung des Sperrfluids mehrere Zuführbohrungen verteilt angeordnet, die jeweils spitzwinklig in den Kanal münden.

Der Ring mit dem Kanal für die Zuführung des Sperrfluids besteht vorzugsweise aus mindestens zwei Teilen, die im montierten Zustand übereinander angeordnet sind, wodurch die Montage der erfindungsgemäßen Dichtungsanordnung wesentlich erleichtert wird.

In einer bevorzugten Ausführungsform der erfindungsgemäßen Dichtungsanordnung weist der Ring mit dem Kanal für die Zuführung des Sperrfluids und der Düse an seiner Außenseite eine über den Umfang des Rings umlaufende Nut auf, um den Ring montieren zu können. In diese Nut greift im montierten Zustand der erfindungsgemäßen Dichtungsanordnung der Innenrand eines Deckels ein, der die Einführöffnung an ihrem Umfangsrand bedeckt.

Vorzugsweise weist diese umlaufende Nut des Rings an ihrem Nutgrund einen Außendurchmesser auf, der kleiner ist als der Innendurchmesser des Deckels. Dies bietet den Vorteil, dass der Ring der Dichtungsanordnung relativ zu dem umgebenden Deckel in radialer Richtung verschiebbar ist. Falls das zu reinigende Beschichtungsmittel-Applikationsgerät beim Einführen in die Einführöffnung aufgrund eines Positionierungsfehlers gegen den Ring stößt, so kann dieser hierbei in radialer Richtung ausweichen, wodurch eine Beschädigung des Beschichtungsmittel-Applikationsgerätes oder der erfindungsgemäßen Dichtungsanordnung weitgehend verhindert wird.

Vorzugsweise weist der Sperrluftstrom bezüglich der abzudichtenden Öffnung eine radial nach innen gerichtete Komponente auf. Es ist jedoch auch möglich, dass der Sperrfluidstrom zusätzlich eine Komponente in Umfangsrichtung der Einführöffnung aufweist, wodurch eine spiralförmige Strömung entsteht. Darüber hinaus kann der Sperrfluidstrom auch eine Komponente in Axialrichtung aufweisen, wobei der Sperrfluidstrom vorzugsweise in das Innere der Reinigungsvorrichtung gerichtet ist, um einen Austritt von Reinigungsflüssigkeit aus der Reinigungsvorrichtung zu verhindern.

Darüber hinaus ist die Einführöffnung der Reinigungsvorrichtung vorzugsweise an die Außenkontur des Beschichtungsmittel-Applikationsgerätes angepasst, so dass im eingeführten Zustand des Beschichtungsmittel-Applikationsgerätes vorzugsweise ein konstanter Spalt der Einführöffnung verbleibt.

Der Spalt zwischen dem Beschichtungsmittel-Applikationsgerät und dem Umfangsrand der Einführöffnung liegt hierbei vorzugsweise in der Größenordnung der Positionierungsgenauigkeit eines Roboters, der das Beschichtungsmittel-Applikationsgerät positioniert. Eine derartige Dimensionierung bietet den Vorteil, dass bei minimalen Dichtungsproblemen trotzdem eine Sicherheit gegenüber einer Kollision zwischen dem Beschichtungsmittel-Applikationsgerät und dem Umfangsrand der Einführöffnung gegeben ist.

Als Material für die erfindungsgemäße Dichtungsanordnung und insbesondere den Ring eignet sich insbesondere Aluminium oder eine Aluminiumlegierung. Es ist jedoch auch möglich, die Dichtungsanordnung bzw. den Ring aus Kunststoff herzustellen, wie beispielsweise Polyethylen (PE), Polytetrafluorethylen (PTFE), Polypropylen (PP), Polyamid (PA), Polyurethan (PUR), Polymethylmethacrylat (PMMA), Polyvinylchlorid (PVC), Polycarbonat (PC), Polyoxymethylen (POM), Polystyrol (PS) oder Kombinationen dieser Materialien.

Andere vorteilhafte Weiterbildungen der Erfindung sind in den Unteransprüchen enthalten oder werden nachstehend zusammen mit der Beschreibung des bevorzugten Ausführungsbeispiels der Erfindung anhand der Figuren näher erläutert. Es zeigen:
- Fig. 1:: eine Reinigungsvorrichtung für ein Beschichtungsmittel-Applikationsgerät mit einer erfindungsgemäßen Dichtungsanordnung,
- Fig. 2:: eine Aufsichtsansicht der erfindungsgemäßen Dichtungsanordnung aus Fig. 1,
- Fig. 3a:: eine Querschnittsansicht der Dichtungsanordnung aus Fig. 2,
- Fig. 3b:: eine Querschnittsansicht eines alternativen Ausführungsbeispiels der Dichtungsanordnung sowie
- Fig. 4:: ein weiteres Ausführungsbeispiel einer erfindungsgemäßen Dichtungsanordnung.

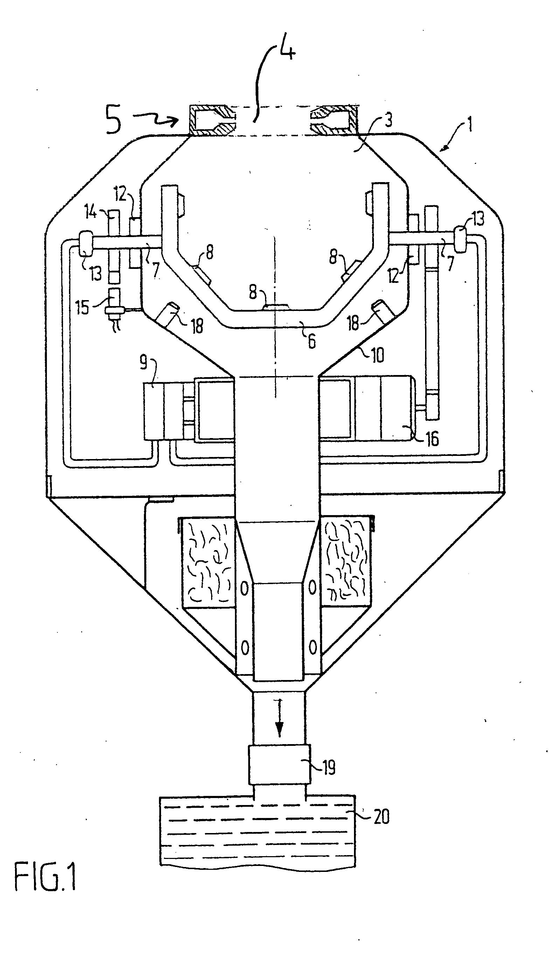

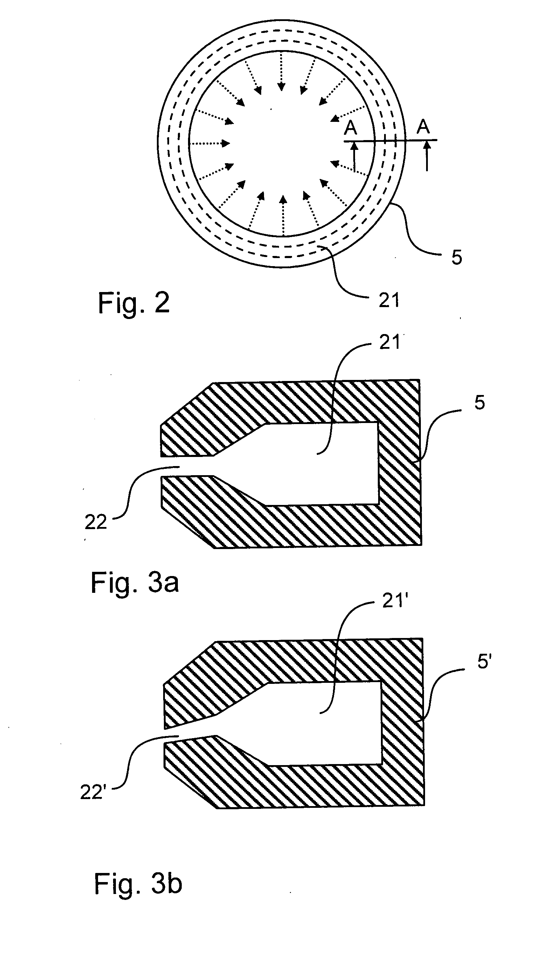

Die Querschnittsdarstellung in Fig. 1 zeigt weitgehend schematisch eine Reinigungsvorrichtung 1 zum Reinigen einer Spritzpistole, wobei die Spritzpistole zur Vereinfachung nicht dargestellt ist. Die Reinigungsvorrichtung 1 hat einen Behälter mit einem um eine in der Regel vertikale Achse rotationssymmetrisch ausgebildeten Innenraum 3. An seiner Oberseite hat der Innenraum 3 konzentrisch zu seiner Achse eine Einführöffnung 4, durch die der zu reinigende Teil der Spritzpistole in den Innenraum einsetzbar ist. Der Zwischenraum zwischen der in die Reinigungsvorrichtung 1 eingesetzten Spritzpistole und dem Rand der Einführöffnung 4 ist durch eine Abdichtvorrichtung 5 abdichtbar, die den Austritt von Reinigungsflüssigkeit und Farbresten verhindert und detailliert in den Figuren 2 und 3a bzw. 3b dargestellt ist.

Im Inneren des Innenraums 3 ist eine um eine quer zur Behälterachse verlaufende Achse drehbare Düsenanordnung 6 angebracht. Die Düsenanordnung 6 ist mittels zweier Wellen 7 gelagert, welche die Zuleitungen für eine der Düsenanordnung zuzuführende Reinigungsflüssigkeit enthalten und in zwei Durchführungen 12 gegen die Außenseite abgedichtet drehbar gelagert sind. Mit den Enden der Wellen 7 sind Leitungen über eine Drehdichtung 13 verbunden. Der Zufluss der Reinigungsflüssigkeit wird durch Ventile 9 gesteuert, vorzugsweise durch Magnetventile, die einen automatischen Betriebsablauf erleichtern.

Die Düsenanordnung 6 enthält mehrere Düsen 8 oder sonstige Düsenöffnungen, durch welche die Reinigungsflüssigkeit auf den zu reinigenden Bereich der Spritzpistole gesprüht wird. Sie besteht im Wesentlichen aus einem allgemein U-förmig oder annähernd halbkreisförmig gebogenen Bügel, der um die quer durch die beiden Bügelschenkel verlaufende Achse der Wellen 7 schwenkbar gelagert ist und derart angeordnet ist, dass die Spritzpistole mit ihrem zu reinigendem Bereich in den Raum zwischen den beiden Bügelschenkeln ragt. Der Bügel ist um mindestens etwa 180° schwenkbar, kann also um das in den Innenraum 3 ragende Ende der Spritzpistole von deren in der Zeichnung sichtbaren Vorderseite bis zu ihrer Rückseite geschwenkt werden, so dass während der Schwenkbewegung alle betreffenden Bereiche der Spritzpistole an allen Stellen direkt besprüht werden. Je nach Ausführung der schwenkbaren Düsenanordnung kann es auch zweckmäßig sein, wenn die Spritzpistole bis unterhalb der Schwenkachse in den Innenraum 3 hineinragt.

Die Düsenanordnung 6 wird von einer mit einer der Wellen 7 gekoppelten pneumatisch oder elektrisch gesteuerten Antriebsvorrichtung 16 bewegt, die mit einer Einstelleinrichtung verbunden ist. Die Drehbewegung erfolgt, um bestimmte, zuvor eingestellte Winkelbeträge in beiden Drehrichtungen, die an der Antriebsvorrichtung 16 umsteuerbar sind. An der anderen Welle 7 ist ein Lagegeber 14 angebracht, der über einen Lagefühler 15 Informationen über die augenblickliche Stellung der Düsenanordnung 6 abgibt. Zur Umkehrung des Antriebs und Rückmeldung der Bügelgrundstellung können an dem Lagefühler 15 zwei Näherungsinitiatoren angebracht sein.

Findet keine Schwenkbewegung statt, so steht der Bügel in einer seitlichen Grundstellung (nicht dargestellt). Beispielsweise bei dieser Stellung kann Spülflüssigkeit oder Spülfluid aus dem Inneren der Spritzpistole unter Innenspülung in die Reinigungsvorrichtung 1 hineinentleert werden. Die Innenspülung von Spritzpistolen ist zwar an sich bekannt, doch ergibt sich hier der Vorteil der problemlosen Entsorgung der Spülflüssigkeit.

Die von der Spritzpistole abfließende, verbrauchte Reinigungsflüssigkeit wird durch einen trichterförmigen Teil 10 des Innenraums 3 gesammelt und über die Mitte des trichterförmigen Teils in einem Sammelbehälter 20 aufgefangen. Vorzugsweise soll während des Sprühvorgangs die Reinigungsflüssigkeit ständig aus dem Innenraum 3 abfließen. Wenn zwischen dem Innenraum 3 und dem Sammelbehälter 20 ein automatisch steuerbares Ventil 19 vorhanden ist, kann der Sammelbehälter 20 bei geschlossenem Ventil durch Druckluft in eine Abflussleitung entleert werden. Die Entleerung kann stattdessen auch durch Unterdruck, also durch Absaugen oder Abpumpen erfolgen. Die Entleerung kann zeitlich gesteuert werden und erfolgt vorzugsweise nach Beendigung des Reinigungsvorganges, möglicherweise zu einer Zeit, wenn die gereinigte Sprühvorrichtung schon wieder in Betrieb ist.

Die Erfindung eignet sich besonders gut für die vollautomatisch gesteuerte Reinigung einer an einem Lackierroboter oder sonstigen Programm gesteuerten Bewegungsautomaten angeordneten Sprühvorrichtung. In diesem Fall kann auch die Reinigungsvorrichtung selbst zweckmäßig an den Roboter angebaut werden. Für den Betrieb der Vorrichtung wird der zu reinigende Teil der Spritzpistole vom Roboter von oben aus einer definierten Einfahrposition (zweckmäßig mit langsamer Geschwindigkeit) senkrecht nach unten durch die Einführöffnung 4 in die Reinigungsvorrichtung 1 eingeführt. Mit (nicht dargestellten) Sensoren kann gemeldet werden, dass die Spritzpistole die richtige Position einnimmt. Über die Düsenanordnung 6 wird die Spritzpistole dann nach einem vorgegebenen Ablaufschema unter gleichzeitiger Bewegung des Schwenkbügels mit Reinigungsflüssigkeit besprüht. Vorzugsweise wird die Spritzpistole nach der Reinigung mit Pressluft getrocknet, die durch separat an der Wand des Innenraums montierte, an eine (nicht dargestellte) Leitung angeschlossene Luftdüsen 18 auf den Sprühkopf der Spritzpistole geblasen wird. Die Luftdüsen können auch auf der schwenkbaren Düsenanordnung 6 angeordnet werden. Während des Reinigungsvorganges und des Trockenvorgangs werden ggf. vorhandene Luftbohrungen (Öffnungen für Hörner- und Zerstäuberluft) in der Außenseite der Spritzpistole durch Ausblasen von Luft vor dem Eindringen von Reinigungsflüssigkeit und Schmutzresten geschützt.

Die Abdichtvorrichtung 5 ist vorzugsweise derart ausgestaltet, dass unvermeidbare radiale und axiale Lageabweichungen zwischen der Spritzpistole und dem Behälter der Reinigungsvorrichtung 1 ausgleichbar sind. Der freie Innendurchmesser der Abdichtvorrichtung 5 ist deshalb vorzugsweise größer als der Außendurchmesser der Spritzpistole, um auch bei einer radialen Fehlpositionierung der Spritzpistole eine Kollision zwischen der Spritzpistole und der Abdichtvorrichtung 5 zu verhindern.

Die in den Figuren 2 und 3a dargestellte Abdichtvorrichtung 5 besteht im Wesentlichen aus einem Ring aus Aluminium mit einem im Inneren des Rings angeordneten umlaufenden Kanal 21 zur Zuführung von Druckluft. Der Ring weist an einer Stelle eine Einspeiseöffnung für Druckluft auf, die in den Kanal 21 mündet und mit einer herkömmlichen Druckluftzuleitung verbunden werden kann.

An der Innenseite mündet der Kanal 21 in einen Spalt 22, der über den gesamten Umfang des Rings umläuft und eine Düse bildet.

Die Druckluft entweicht also aus dem Kanal 21 durch den Spalt 22 und streicht radial nach innen über die Einführöffnung 4, wodurch ein Austritt von Reinigungsflüssigkeit aus der Reinigungsvorrichtung 1 verhindert wird. Bei dem in Fig. 3a dargestellten Ausführungsbeispiel ist die Austrittsrichtung des Sperrluftstroms exakt radial und weist keine Axialkomponente auf.

Fig. 3b zeigt dagegen ein alternatives Ausführungsbeispiel einer erfindungsgemäßen Dichtungsanordnung 5' mit einem Kanal 21' und einem an der Innenseite der Dichtungsanordnung 5' angeordneten, umlaufenden Spalt 22', der eine Düse bildet. Die Besonderheit dieses Ausführungsbeispiels besteht darin, dass der Spalt 22' so geformt ist, dass der austretende Sperrluftstrom eine Axialkomponente aufweist, die bezüglich der Reinigungsvorrichtung 1 nach innen gerichtet ist. Hierdurch wird zusätzlich verhindert, dass Reinigungsflüssigkeit oder Farbreste aus der Reinigungsvorrichtung 1 austreten können.

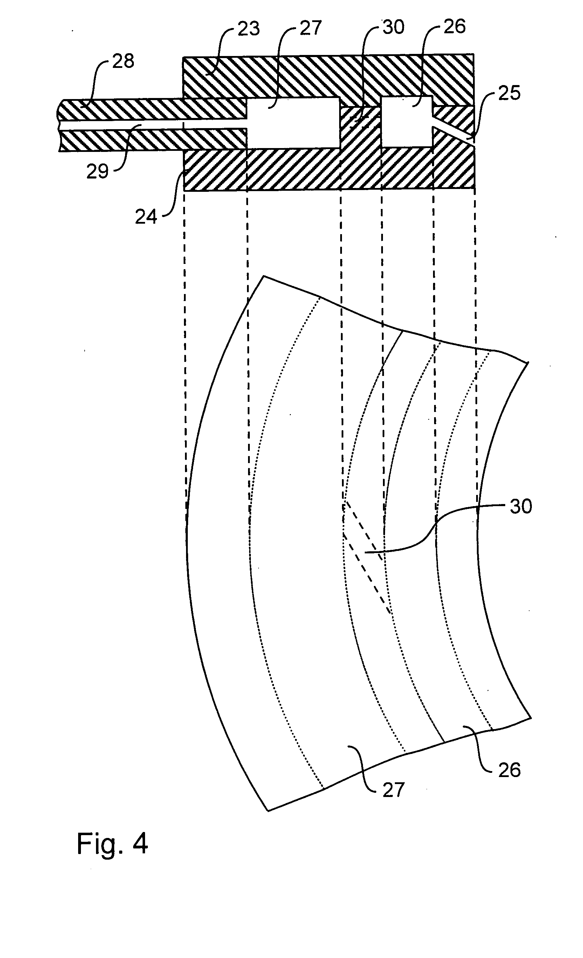

Das in Figur 4 dargestellte Ausführungsbeispiel einer erfindungsgemäßen Dichtungsanordnung stimmt weitgehend mit dem vorstehend beschriebenen und in den Figuren 1 bis 3b dargestellten Ausführungsbeispiel überein, so dass im Folgenden nur die Besonderheiten dieses Ausführungsbeispiels erläutert werden und ansonsten auf die vorstehende Beschreibung zu den Figuren 1 bis 3b verwiesen wird.

Figur 4 zeigt im oberen Bereich eine Querschnittsansicht durch eine erfindungsgemäße Dichtungsanordnung entlang der Line A-A in Figur 2. Die Dichtungsanordnung weist ebenfalls einen Ring auf, der aus einem Oberteil 23 und einem Unterteil 24 besteht, wobei das Oberteil 23 und das Unterteil 24 im montierten Zustand durch eine Schraubverbindung miteinander verbunden sind, die zur Vereinfachung nicht dargestellt ist.

An seiner Innenseite weist der Ring eine umlaufende Düse 25 in Form eines Schlitzes auf, der im Inneren des Ringes in einen Kanal 26 zur Zuführung von Druckluft mündet. Die Düse 25 ist hierbei so ausgerichtet, dass die aus der Düse 25 austretende Druckluft eine Axialkomponente in das Innere der Reinigungsvorrichtung 1 aufweist. Hierdurch wird die Dichtwirkung verbessert, da die Beschichtungsmittelpartikel in das Innere der Reinigungsvorrichtung 1 zurück gedrückt werden.

An seiner radial außen liegenden Seite weist der Ring eine Nut 27 auf, die über den gesamten Umfang des Rings umläuft und eine Montage des Rings auf der Reinigungsvorrichtung 1 ermöglicht. Hierbei weist die Reinigungsvorrichtung 1 einen Deckel 28 auf, der auf der Einführöffnung der Reinigungsvorrichtung 1 aufliegt und mit seinem inneren Umfangsrand in der Nut 27 des Rings aufgenommen wird, wodurch der Ring befestigt wird. Der Außendurchmesser des Rings am Nutgrund der Nut 27 ist hierbei wesentlich kleiner als der Innendurchmesser des Deckels 28, so dass zwischen dem Deckel 28 und dem Ring eine radiale Spielpassung besteht, was eine radiale Verschiebung des Rings relativ zu dem Deckel 28 ermöglicht. Auf diese Weise kann der Ring seitlich ausweichen, wenn das Beschichtungsmittel-Applikationsgerät beim Einführen in die Einführöffnung aufgrund einer Fehlpositionierung an den Ring anstößt. Hierdurch wird vorteilhaft eine Beschädigung des Beschichtungsmittel-Applikationsgerätes oder der erfindungsgemäßen Dichtungsanordnung verhindert.

In dem Deckel 28 befindet sich hierbei ein Zufuhrkanal 29 zur Zuführung von Druckluft, der in die Nut 27 mündet. Die Stoßstellen zwischen dem Oberteil 23 und dem Deckel 28 sowie zwischen dem Unterteil 24 und dem Deckel 28 sind deshalb mittels eines Dichtrings abgedichtet, wobei der Dichtring zur Vereinfachung nicht dargestellt ist.

Die Nut 27 ist über eine Zuführbohrung 30 mit dem Kanal 26 verbunden, wobei die Zuführbohrung 30 eine tangentiale Richtungskomponente aufweist, damit sich die in den Kanal 26 eingeblasene Druckluft möglichst gleichmäßig über den Umfang des Ringes verteilt, was vorteilhaft zu einem gleichmäßigen Ausblasdruck durch die Düse 25 führt.

Die Erfindung ist nicht auf das vorstehend beschriebene bevorzugte Ausführungsbeispiel der Erfindung beschränkt. Vielmehr ist eine Vielzahl von Varianten und Abwandlungen denkbar, die ebenfalls von dem erfindungsgemäßen Gedanken Gebrauch machen und deshalb in den Schutzbereich fallen.

## Patentansprüche

1. Dichtungsanordnung (5) zur berührungslosen Abdichtung einer Öffnung (4), insbesondere zur Abdichtung eines Spaltes zwischen einem Umfangsrand einer Einführöffnung einer Reinigungsvorrichtung und einem in die Einführöffnung eingeführten Beschichtungsmittel-Applikationsgerät, mit einer am Umfangsrand der Öffnung (4) angeordneten Düse (22, 22', 25) zur Abgabe eines die Öffnung (4) mindestens teilweise abdichtenden Sperrfluidstroms im wesentlichen quer über die Öffnung (4), **dadurch gekennzeichnet, daß**
sich die Düse (22, 22', 25) in Umfangsrichtung mindestens über einen Großteil des Umfangsrandes der Öffnung (4) erstreckt.

2. Dichtungsanordnung (5) nach Anspruch 1, **dadurch gekennzeichnet, daß** sich die Düse (22, 22', 25) in Umfangsrichtung über den gesamten Umfangsrand der Öffnung (4) erstreckt.

3. Dichtungsanordnung (5) nach Anspruch 1 und/oder Anspruch 2, **gekennzeichnet durch** einen die Öffnung (4) umgebenden Ring mit einem im Inneren des Rings angeordneten umlaufenden Kanal (21, 21', 26) zur Zuführung eines Sperrfluids, wobei der Kanal (21, 21', 26) in die Düse (22, 22', 25) mündet.

4. Dichtungsanordnung nach Anspruch 3, **dadurch gekennzeichnet, daß** der Kanal (26) mit einer Zuführbohrung (30) zur Zuführung des Sperrfluids verbunden ist, wobei die Zuführbohrung (30) eine tangentiale Richtungskomponente aufweist.

5. Dichtungsanordnung nach Anspruch 3 und/oder Anspruch 4, **dadurch gekennzeichnet, daß** der Ring aus mindestens zwei Teilen (23, 24) besteht, die im montierten Zustand übereinander angeordnet sind.

6. Dichtungsanordnung nach mindestens einem der Ansprüche 3 bis 5, **dadurch gekennzeichnet, daß** der Ring an seiner Außenseite eine umlaufende Nut (27) aufweist, in die ein Innenrand eines Deckels (28) eingreift.

7. Dichtungsanordnung nach Anspruch 6, **dadurch gekennzeichnet, daß** die umlaufende Nut (27) des Rings an ihrem Nutgrund einen Außendurchmesser aufweist, der kleiner ist als der Innendurchmesser des Deckels (28).

8. Dichtungsanordnung nach Anspruch 6 und/oder Anspruch 7, **dadurch gekennzeichnet, daß** an der Kontaktstelle zwischen den Nutflanken der Nut (27) und dem Deckel (28) mindestens eine Dichtung angeordnet ist.

9. Dichtungsanordnung (5) nach mindestens einem der vorhergehenden Ansprüche, **dadurch gekennzeichnet, daß** der Sperrfluidstrom bezüglich der Öffnung (4) im wesentlich radial nach innen ausgerichtet ist.

10. Dichtungsanordnung (5) nach mindestens einem der vorhergehenden Ansprüche, **dadurch gekennzeichnet, daß** der Sperrfluidstrom eine Komponente in Umfangsrichtung aufweist.

11. Dichtungsanordnung (5) nach mindestens einem der vorhergehenden Ansprüche, **dadurch gekennzeichnet, daß** der Sperrfluidstrom eine Komponente in Axialrichtung aufweist.

12. Dichtungsanordnung (5) nach mindestens einem der vorhergehenden Ansprüche, **dadurch gekennzeichnet, daß** das Sperrfluid Luft ist.

13. Dichtungsanordnung (5) nach mindestens einem der vorhergehenden Ansprüche, **dadurch gekennzeichnet, daß** die Einführöffnung der Reinigungsvorrichtung eine Form aufweist, die an die Außenkontur des Beschichtungsmittel-Applikationsgeräts angepaßt ist, so daß zwischen dem Umfangsrand der Einführöffnung und dem Beschichtungsmittel-Applikationsgerät ein Spalt mit einer über den Umfang im wesentlichen konstanten Breite vorhanden ist.

14. Dichtungsanordnung (5) nach mindestens einem der vorhergehenden Ansprüche, **dadurch gekennzeichnet, daß** der Spalt zwischen dem Beschichtungsmittel-Applikationsgerät und dem Umfangsrand der Einführöffnung in der Größenordnung der Positionierungsgenauigkeit eines Roboters liegt, der das Beschichtungsmittel-Applikationsgerät positioniert.
